# EUROPEAN PATENT APPLICATION

(11) **EP 1 233 581 A2**
(43) Date of publication of application: **21.08.2002**
(21) Application number: 02003571.3
(22) Date of filing: 15.02.2002
(51) Int. Cl.: H04L 12/56

(54) **Packet transmitter and method**

(30) Priority: 20.02.2001 JP 2001043680
(71) Applicant: Pioneer Corporation, Tokyo 153-0063 (JP)
(72) Inventor: Hidemi, Usuba, Tokorozawa-shi, Saitama 359-0047 (JP)
(74) Representative: Grünecker, Kinkeldey, Stockmair & Schwanhäusser Anwaltssozietät

(57) **Abstract**

To provide a packet transmitter and a method for executing packet transmission fluently when a node having destination converging exists, a packet transmitter includes a destination storing unit for storing a packet to be transmitted separately in respective destination in sequence; a transmitting unit for transmitting the packet, which is stored separately in respective destination, separately in a destination sequence; and a control unit for stopping packet transmission for a predetermined period of time to the destination to which the packet transmission by the transmitting unit is failed.

## Description

### BACKGROUND OF THE INVENTION

### Field of the Invention

This invention relates to a packet transmitter for transmitting packets and a method for transmitting packets.

### Description of the Related Art

Packet transmission is used for data transmission in Internet and data transmission in office, today.

In such data transmission by packets, a destination data is attached to a transmitting packet data. When the destination of the transmitted packet data is own node, the packet data is received in the own node, and ACK signal to inform successful packet transmission or NACK signal to inform unsuccessful packet transmission, which has data error in the packet data, and to request retransmitting the packet data is returned to the transmitter.

### Objects to be solved

Each node, which corresponds to a packet destination, is not limited to transmit packets compared with many other nodes, and then a ruck of packet destinations may converge into a certain node in a moment.

In the node which a ruck of packet destinations converge into, processing for packets requires much time and all processing in the node cannot be proceeded in case of node down.

When a node having destination converging exists, other node which transmits the packet to the node cannot receive ACK or NACK signal for a long time and then has an impediment to transmit other packets.

Therefore, an object of the invention is to provide a packet transmitter and a method for executing packet transmission fluently when a node having destination converging exists.

### SUMMARY OF THE INVENTION

### How to attain the object

In order to attain the objects, a packet transmitter includes a destination storing unit for storing a packet to be transmitted separately in respective destination in sequence; a transmitting unit for transmitting the packet, which is stored separately in respective destination, separately in a destination sequence; and a control unit for stopping packet transmission for a predetermined period of time to a destination to which packet transmission by the transmitting unit is failed.

Furthermore, the packet transmitter includes the packet transmitter as referred to above, wherein the control unit controls to transmit packets to destinations other than the destination to which packet transmission is stopped.

Furthermore, the packet transmitter includes the packet transmitter as referred to above, wherein the control unit judges that packet transmission has failed when a response for a transmitted packet is not received within a predetermined period of time.

Furthermore, the packet transmitter includes the packet transmitter as referred to above, wherein the control unit judges that packet transmitting ahs failed when a response message shows that the transmitted packet is received unsuccessfully.

A method for transmitting packets comprises the steps of: storing a packet separately in respective destination in sequence; transmitting the packet separately in a destination sequence; and stopping packet transmission for a predetermined period of time to the destination in which packet transmission is failed.

Furthermore, the method for transmitting packets includes the method for transmitting packets as referred to above and further comprises a step of transmitting packets to destinations other than the destination to which the packet transmission is stopped.

Furthermore, the method for transmitting packets includes the method for transmitting packets as referred to above and further comprises a step of judging that packet transmission has failed when a response for the transmitted packet is not received within a predetermined period of time.

Furthermore, the method for transmitting packets includes the method for transmitting packets as referred to above and further comprises a step of judging that packet transmission has failed when a response message shows that the transmitted packet is received unsuccessfully.

As mentioned above, the process of storing a packet to be transmitted separately in respective destination in sequence; transmitting the packet, which is stored in respective destination, in à destination sequence; and when packet transmission for a destination is failed, stopping the packet transmission for a predetermined period of time assures to transmit other packets fluently even if a node having destination converging exists.
Although the present invention has been fully described by way of examples with reference to the accompanying drawings, it is to be noted that various change and modifications can be made with the scope of the present invention. Incidentally, the content of Japanese Patent Application No. 2001-43680 is hereby incorporated by reference.

### BRIEF DESCRIPTION OF THE DRAWINGS

Fig. 1 is a schematic diagram of an embodiment of this invention;
Fig. 2 is a drawing, showing a physical example of a destination storing unit of the embodiment of this invention;
Fig. 3 is a process flowchart of receiving operation of transmitted packets in the embodiment of this invention;
Fig. 4 is a process flowchart 1/2 of packet transmitting operation in the embodiment of this invention;
Fig. 5 is a process flowchart 2/2 of packet transmitting operation in the embodiment of this invention

### DESCRIPTION OF THE PREFERRED EMBODIMENT

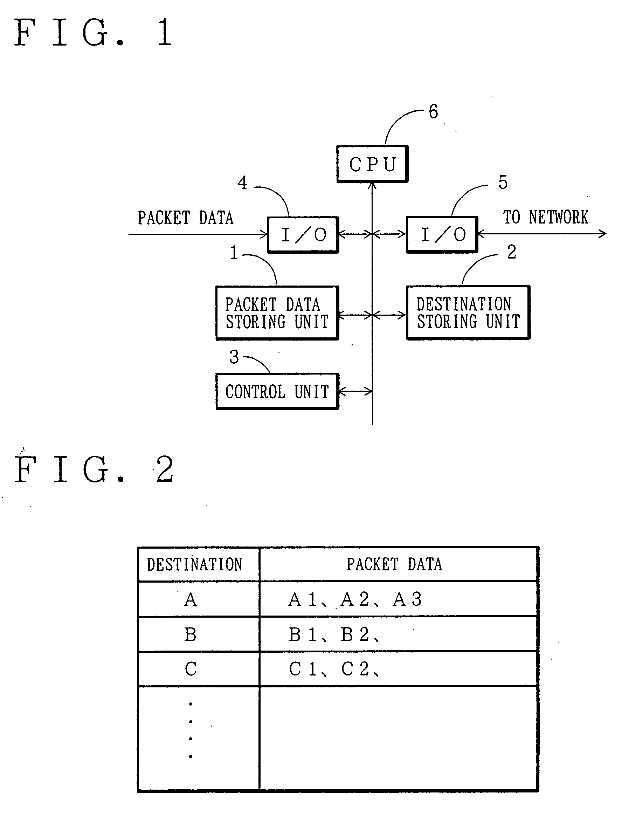

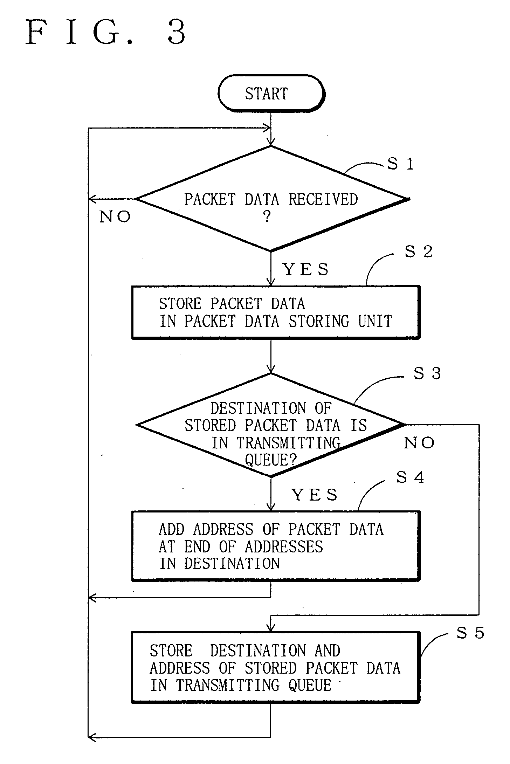

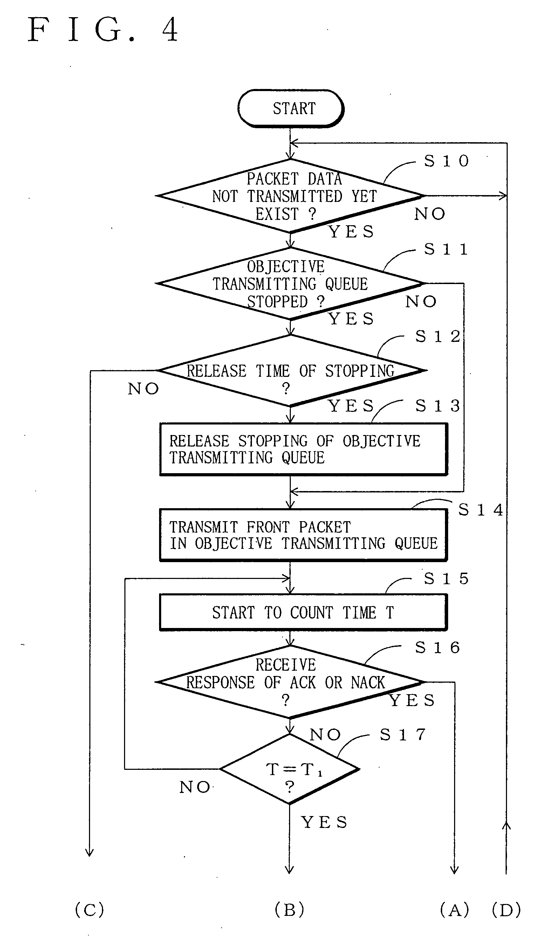

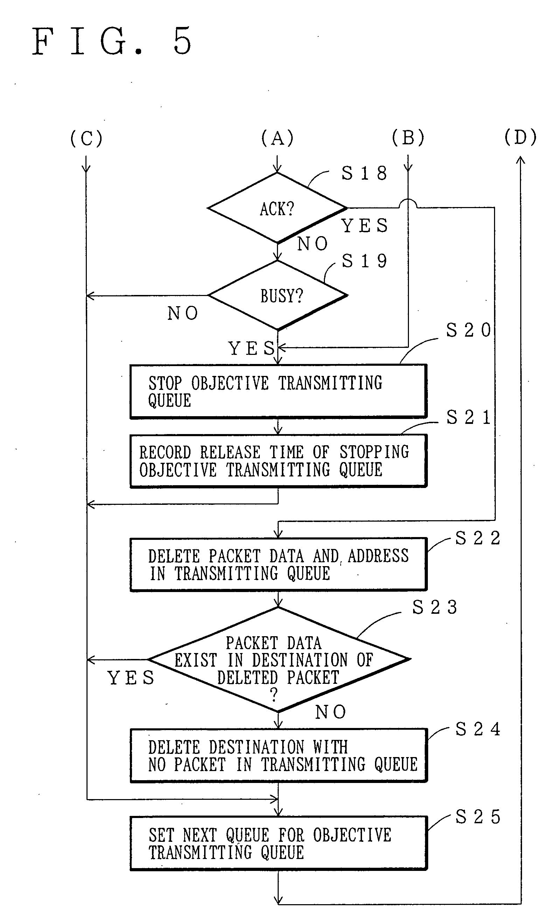

A packet transmitter and a method of transmitting a packet according to an embodiment of this invention will now be described with reference to Fig. 1-5. Fig. 1 is a schematic diagram of the embodiment of this invention. Fig. 2 shows a physical example of a destination storing unit of the embodiment of this invention. Fig. 3 is a process flowchart for receiving operation of transmitted packet data of the embodiment of this invention. Fig. 4 and 5 are process flowcharts for packet transmitting operation of the embodiment of this invention.

In Fig. 1, mark 1 is a packet data storing unit, mark 2 is a destination storing unit, mark 3 is a control unit and marks 4, 5 are interfaces (I/O), and mark 6 is a processor (CPU) to execute processes in conformity with control instructions by the control unit 3. Combination of the packet data storing unit 1 and the destination storing unit 2 in this embodiment corresponds to a destination storing unit in claims of this invention.

The I/O 5 is the interface for transmitting packets to a network and the I/O 4 is the interface for receiving transmitted packet data, which are transmitted to the network.

An action of receiving transmitted packet data, which are transmitted to a network, is described with reference to Fig.3.

In step S1, the control unit 3 judges whether or not a transmitted packet data is received through the I/O 4 and stands by to receive a packet data when the judgement is NO.

In step S2, when a transmitted packet data is received, the control unit 3 makes the packet data storing unit 1 store the transmitted packet data.

In step S3, the control unit 3 judges whether or not the destination of the transmitted packet data, which is stored in step S2, is stored in a transmitting queue of the destination storing unit 2, and when the judgement is YES, the process proceeds to step S4 and the address of the packet data storing unit 1, in which the packet data is stored in step S2, is added at the end of the transmitting queue correspondingly to the destination.

When the judgement in step S3 is NO, the process proceeds to step S5, and the destination data of the packet data and the address of the packet data storing unit 1, in which the packet data is stored, are stored in the transmitting queue of the destination storing unit 2.

Therefore, a transmitting queue as shown in Fig. 2 is stored in the destination storing unit 2.

In Fig. 2, destinations of packet data are stored in the first row and the addresses of the packet data storing unit 1, in which packet data are stored, are stored in the second row correspondingly to respective destinations.

When a packet data is received, the received packet data is stored in the packet data storing unit 1 and the address of the packet data storing unit 1, in which the packet data is stored, is added at the end of addresses correspondingly to the destination of the packet data in Fig. 2.

If the destination of the packet data does not exist in Fig. 2, the new destination of the packet is added and the address of the stored packet data is stored correspondingly to the new destination.

An action of transmitting packet data is described with reference to Fig.4, 5.

In step S10, the control unit 3 judges whether or not a packet data which is not transmitted yet exists with reference to the destination storing unit 2, and when the judgement is NO, the control unit stands by until a packet data to be transmitted is stored.

In step S11, the control unit 3 selects an objective transmitting queue which is judged by the control unit 3 whether or not a packet data in the transmitting queue will be transmitted in later process. In other words, the control unit 3 selects one of the transmitting queues, which are judged to have a packet which is not transmitted yet, for the objective transmitting queue. The objective transmitting queue is judged whether or not packet transmission is stopped and when the judgement is YES, the process proceeds to step S12 and when the judgement is NO, the process proceeds to step 14.

In step S12, the control unit 3 judges whether or not the recorded release time of stopping the objective transmitting queue is equal to the present time or over and when the judgement is neither equal nor over, the process proceeds to step S25.

When the judgement is equal or over, the process proceeds to step S13 and the condition of stopping the objective transmitting queue is released. Then, the process proceeds to step S14 and the control unit 3 makes the front packet in the objective transmitting queue transmitted through I/O 5.

In step S15, the control unit 3 starts to count a time T at each time when a packet data is transmitted through I/O 5 in step 14.

In step S16, the control unit 3 judges whether or not a response (ACK or NACK) for a packet transmitted in step S14 is returned by a node of a destination and received, and when the judgement is YES, i.e. the response is returned, the process proceeds to step S18.

When the response is not returned, the process proceeds to step S17 and a time counted from starting is judged whether or not the time passes over a predetermined time T1 in step S15 and when the counted time does not pass over the time T1, the process proceeds to step 15. Thus, process loop of step S15-S17 is repeated.

When it is judged that the counted time passes over the time T1 in step S17, the process proceeds to step 20.

In other words, when the response by the node corresponding to the destination for the transmitted packet data in step S14 is received within the time T1, the process proceeds to step S18, and when the response is not received over the time T1, the process proceeds to step S20.

In step S18, the control unit 3 judges whether or not the response returned by the node of the destination is ACK and when the response is ACK to inform successful packet receiving, the process proceeds to step S22 and when the response is NACK, the process proceeds to step S19.

In step S19, the control unit 3 judges whether or not the response is BUSY, later described, with reference to the response NACK, and when the response is BUSY, the process proceeds to step S20, and when the response is not BUSY, the process proceeds to S25.

In step S20, when the response of BUSY is received, the control unit 3 sets the objective transmitting queue in a stopped condition and process proceeds to step S21. And then, a release time of stopping the objective transmitting queue (the time after the predetermined time T1 from the present time) is recorded and the process proceeds to step S25.

When ACK signal is received in step S18, the process proceeds to step S22. In step S22, the control unit 3 deletes a packet data, stored in the packet data storing unit 1, which has a response and also deletes a data in the transmitting queue, stored in the destination storing unit 2, which has a response.

In step S23, the control unit 3 judges whether or not a packet, which is not transmitted yet, exists in a destination in which a packet data is deleted in step S22 and when the judgement is YES, the process proceeds to step S25. When the judgement is NO, which means that no packet which is not transmitted yet exists, the process proceeds to step S24. And then, a destination which has no packet data is deleted from the transmitting queue and the process proceeds to step S25.

In step S25, the control unit 3 selects the next transmitting queue for the objective transmitting queue and the process proceeds to step S10. Thus, this process loop of step S10 - step S25 is repeated.

The NACK signal means the response to request retransmitting a packet data when a packet-receiving node can not execute processing of packet receiving normally herein. Causes which processing of packet receiving can not be executed normally are considerably a filled receiving buffer or an error by a broken data.

In other words, the NACK signal by a filled receiving buffer shows BUSY and the other NACK signal shows a data error. According to Fig. 4 and 5, a case of NO in S18 means that NACK signal is returned and a case of YES in S19 means that the NACK signal shows that the node corresponding to the destination is in BUSY and a case of NO in S19 means that the NACK signal shows a data error.

According to processing in Fig. 4 and 5, when the destination storing unit 2 stores data as shown in Fig. 2, the address of the packet data storing unit 1, which is shown by A1 stored in the front of the queue of the destination A, is read out and the packet data, which is stored in the address of the packet data storing unit 1 corresponding to the read-out address, is read out and transmitted through I/O 5 to a network.

After processing of the packet transmission for the address shown by A1 in the destination A is finished, the address shown by B1 in the destination B is read out and the packet data in the address of the packet data storing unit 1 is transmitted through I/O 5 to a network similarly as above process loop. After the processing for B1, the similar processing for C1 in the destination C is executed. Thereafter, the process loop proceeds to execute the similar processing for A2 in the destination A.

When NACK signal for the transmitted packet data in the address shown by A2 is returned in above process, the transmitting queue of the destination A is stopped for a predetermined period of time and other packet data of transmitting queues of the other destinations B, C are transmitted in sequence during the stopped condition.

This embodiment according to the invention can be applied for any devices which transmit data by packets. For example, it can be applied for a packet transmitter which meets the standard of IEEE-1394 or IEEE-802.3 (Ethernet).

When packet transmission to a destination is failed, transmitting all packet data in the transmitting queue of the destination is stopped for a predetermined period of time. Therefore, disarranging an order of transmitting packet data to the node of the same destination can be prevented.

## Claims

1. A packet transmitter, comprising:
a destination storing unit for storing a packet to be transmitted separately in respective destination in sequence;
a transmitting unit for transmitting the packet, which is stored separately in respective destination, in a destination sequence; and
a control unit for stopping packet transmission for a predetermined period of time to a destination to which the packet transmission by the transmitting unit is failed.

2. The packet transmitter according to claim 1, wherein the control unit controls to transmit other packets to destinations other than the destination to which the packet transmission is stopped.

3. The packet transmitter according to claim 1 or 2, wherein the control unit judges that the packet transmission has failed when a response for the transmitted packet is not received within a predetermined period of time.

4. The packet transmitter according to claim 1 or 2, wherein the control unit judges that the packet transmission has failed when a response message shows that the transmitted packet is received unsuccessfully.

5. The packet transmitter according to claim 3, wherein the control unit judges the packet transmission failed when a response message shows that the transmitted packet is received unsuccessfully.

6. A method for transmitting a packet, comprising the steps of:
storing a packet separately in respective destination in sequence;
transmitting the packet separately in a destination sequence; and
stopping packet transmission for a predetermined period of time to a destination to which the packet transmission is failed.

7. The method for transmitting a packet according to claim 6, further comprising a step of transmitting packets to destinations other than the destination to which the packet transmission is stopped.

8. The method for transmitting a packet according to claim 6 or 7, further comprising a step of judging that the packet transmission has failed when a response for the transmitted packet is not received within a predetermined period of time.

9. The method for transmitting a packet according to claim 6 or 7, further comprising a step of judging that the packet transmission has failed when a response message shows that the transmitted packet is received unsuccessfully.

10. The method for transmitting a packet according to claim 8, further comprising a step of judging that the packet transmission has failed when a response message shows that the transmitted packet is received unsuccessfully.
